# EUROPEAN PATENT APPLICATION

(11) **EP 4 737 052 A1**
(43) Date of publication of application: **06.05.2026**
(21) Application number: 24875873.2
(22) Date of filing: 09.01.2024
(51) Int. Cl.: B23K 26/70

(54) **WELDING PROTECTION DEVICE, WELDING SYSTEM, POSITION ADJUSTING METHOD, AND WELDING METHOD**

(30) Priority: 08.10.2023 CN 202311289831
(71) Applicant: Contemporary Amperex Technology Co., Limited, Ningde, Fujian 352100 (CN)
(72) Inventor: WU, Kai, Ningde, Fujian 352100 (CN); ZHANG, Beining, Ningde, Fujian 352100 (CN); WU, Ying, Ningde, Fujian 352100 (CN); WANG, Wenchong, Ningde, Fujian 352100 (CN); XIE, Wenjie, Ningde, Fujian 352100 (CN); LUO, Ji, Ningde, Fujian 352100 (CN)
(74) Representative: Ran, Handong
(86) International application number: PCT/CN2024/071328
(87) International publication number: WO 2025/077041

(57) **Abstract**

The present disclosure relates to the technical field of battery production. Disclosed are a welding protection device, a welding system, a position adjusting method, and a welding method. A housing comprises a protection main body and protection covers, the protection main body and the protection covers define a protection cavity, and the protection covers can extend and retract. Multiple protection assemblies are arranged on the housing, each protection assembly is provided with a welding area communicated with the protection cavity, the welding area penetrates through the protection assembly, and the welding area is used for allowing a tip to pass through and perform welding. A driving assembly is arranged on the protection main body, the driving assembly is used for driving the protection assemblies and/or the protection main body to move so as to enable at least one protection assembly and a corresponding protection cover to move, and the direction of extension and retraction of each protection cover is arranged in the corresponding direction of movement of the protection assembly so as to limit a welding material from being separated from the protection cavity.

## Description

### CROSS-REFERENCE TO RELATED APPLICATION

The present disclosure is presented based on Chinese Patent Application No. 202311289831.0, filed on October 8, 2023 and entitled "WELDING PROTECTION DEVICE, WELDING SYSTEM, POSITION ADJUSTMENT METHOD, AND WELDING METHOD", and claims the priority to the Chinese Patent Application, the content of which is incorporated herein by reference in its entirety.

### TECHNICAL FIELD

The present disclosure relates to the technical field of battery production, and in particular, to a welding protection device, a welding system, a position adjustment method, and a welding method.

### BACKGROUND

New energy batteries are increasingly applied in life and industry. For example, new energy vehicles equipped with batteries have been widely used. In addition, batteries are also increasingly used in energy storage and other fields.

In the related art, welding protection devices are difficult to accommodate the welding of terminal posts with varying spacings therebetween while providing protection.

### SUMMARY

To address the above technical problem, the present disclosure provides a welding protection device, a welding system, a position adjustment method, and a welding method to accommodate the welding of terminal posts with varying spacings therebetween while providing protection.

The present disclosure is implemented by the following technical solutions.

A first aspect of embodiments of the present disclosure provides a welding protection device. The welding protection device includes:
a housing, including a protection body and a shield, where the protection body and the shield define a protection cavity in an enclosing manner, and the shield is capable of extending and retracting;
a protection assembly, disposed on the housing, where a plurality of protection assemblies are provided, the protection assembly has a welding zone in communication with the protection cavity, the welding zone penetrates through the protection assembly, and the welding zone is configured for a welding nozzle to pass therethrough for welding; and
a drive assembly, disposed on the protection body, where the drive assembly is configured to drive the protection assembly and/or the protection body to move, such that at least one of the protection assemblies and the shield move, and an extending and retracting direction of each shield is arranged along a movement direction corresponding to the protection assembly, so as to restrict welding materials from escaping from the protection cavity.

In the embodiments of the present disclosure, the protection assembly and/or the protection body is driven to move by the drive assembly, such that at least one of the protection assemblies and the shield move. The protection assembly moves to adapt to the welding of terminal posts with varying spacings therebetween, and the shield moves to extend and retract to adapt to changes in the space of the housing during the movement of the protection assembly, thereby facilitating protection of the battery unit during the welding process.

In an embodiment, the shield includes:
a supporting body, disposed on the corresponding protection body and/or the corresponding protection assembly, a plurality of supporting bodies being provided, and the plurality of supporting bodies being sequentially spaced apart from each other; and
a folding member, disposed on the supporting body, where the folding member is disposed between each two adjacent supporting bodies, and the folding member and the corresponding supporting body are capable of being folded relative to each other, such that the two adjacent supporting bodies move closer to or away from each other.

In the embodiments of the present disclosure, the shield is extended and retracted through mutual folding and unfolding between the folding member and the supporting body.

In an embodiment, the folding member of the shield includes two interconnected folding plates. The two folding plates are capable of being folded relative to each other, each of the folding plates is connected to a corresponding supporting body of two adjacent supporting bodies, the folding plates and the corresponding supporting bodies are capable of being folded relative to each other, a position at which the folding plates and the corresponding supporting bodies are folded relative to each other is a target position, and an arrangement direction of a plurality of target positions is consistent with an arrangement direction of a plurality of corresponding supporting bodies.

In the embodiments of the present disclosure, the arrangement direction of the plurality of target positions is consistent with the arrangement direction of the plurality of corresponding supporting bodies, such that the supporting bodies can be kept as orderly as possible during the movement, and the possibility of misalignment of the supporting bodies is reduced.

In an embodiment, the drive assembly includes a first drive component disposed on the protection body, at least one of the protection assemblies is a first protection assembly, two opposite sides of the first protection assembly are each provided with the shield, an arrangement direction of the shields on the two sides is a first direction, the first drive component drives the first protection assembly to move along the first direction, and extending and retracting directions of the shields on the two sides are arranged along the first direction.

In the embodiments of the present disclosure, the first protection assembly moves to adjust the spacing between two protection assemblies along the first direction, so as to adapt to the welding of terminal posts with varying spacings therebetween along the first direction. The shields on the two sides extend and retract along the first direction to adapt to changes in the space of the housing during the movement of the first protection assembly along the first direction, thereby facilitating better protection of the battery unit during the welding process.

In an embodiment, the protection body is provided with a guide groove and an auxiliary groove spaced apart from each other, an arrangement direction of the guide groove and the auxiliary groove is a second direction, the second direction is arranged to intersect with the first direction, and the protection assembly includes:
a base, disposed on the housing, where the base is provided with positioning portions spaced apart from each other along the second direction, and the corresponding positioning portion is located in the guide groove, such that the corresponding positioning portion is in positioning contact with the protection body along the second direction;
a protection nozzle, at least partially located on a side of the base facing away from the protection cavity, where the welding zone penetrates through the base and the protection nozzle, the protection nozzle is provided with a mounting portion connected to the base, the corresponding mounting portion is located between two of the positioning portions along the second direction, two opposite sides of the corresponding mounting portion along the first direction are each provided with the shield located in the guide groove, and the first drive component is configured to drive the base and/or the protection nozzle to move along the first direction; and
an air pipe, where the air pipe extends from a side of the housing facing the protection cavity to a side of the housing facing away from the protection cavity, the corresponding air pipe is disposed in the auxiliary groove in a penetrating manner, two opposite sides of the corresponding air pipe along the first direction are each provided with the shield located in the auxiliary groove, and an end of the air pipe facing away from the protection cavity is connected to the protection nozzle, to provide protective gas to the welding zone and/or to evacuate the welding zone to a negative pressure.

In the embodiments of the present disclosure, the air pipe is disposed in the auxiliary groove, and the air pipe is not disposed in the guide groove that positions the positioning portion. The dimension of the guide groove along the second direction and the spacing between the two positioning portions along the second direction may be appropriately set, which is beneficial for improving positioning accuracy.

In an embodiment, at least one of the protection assemblies is a second protection assembly, the second protection assembly and the first protection assembly are spaced apart from each other along the first direction, and the second protection assembly is connected to the protection body; in the shields on the two sides, the shield on one side is connected between the first protection assembly and the second protection assembly, and the shield on the other side is connected between the first protection assembly and the protection body.

In the embodiments of the present disclosure, the second protection assembly is connected to the protection body, and the second protection assembly does not move relative to the protection body, which is beneficial for simplifying the assembly relationship between the second protection assembly and the protection body. The shield on one side is connected between the first protection assembly and the second protection assembly, and it is not necessary to use the structure of the protection body to mount the corresponding shield, which is beneficial for simplifying the structure of the protection body.

In an embodiment, the drive assembly includes a second drive component disposed on the protection body, two protection bodies are provided, a direction in which the two protection bodies are spaced apart from each other is a third direction, the shield is correspondingly connected between the two protection bodies, the extending and retracting direction of the shield between the two protection bodies is arranged along the third direction, the two protection bodies are both disposed on the second drive component, and the second drive component drives the two protection bodies to move along the third direction, such that protection assemblies corresponding to the two protection bodies move closer to or away from each other along the third direction.

In the embodiments of the present disclosure,

In an embodiment, the protection assembly includes:
a base, disposed on the housing, where the base includes a base body and a plurality of mounting members disposed on the base body, at least two of the mounting members are arranged opposite to each other, and the mounting members are capable of extending and retracting; and
a protection nozzle, connected to the base body of the base, where the welding zone penetrates through the protection nozzle and the base body of the base, the mounting member is capable of being at least partially located in the protection nozzle in an extended state, such that the protection nozzle is mounted between two mounting members arranged opposite to each other; the mounting members are capable of being switched from the extended state to a retracted state under the action of an external force, such that the protection nozzle is detached from the mounting member; and the drive assembly is configured to drive at least one of the protection body, the protection nozzle, and the base body of the base to move along the first direction.

In the embodiments of the present disclosure, the protection nozzle can be conveniently folded and mounted through the extension and retraction of the mounting member.

In an embodiment, the mounting member includes:
a housing sleeve, connected to the base body, where the housing sleeve has a cavity for telescopic movement;
a bearing member, located in the cavity for telescopic movement;
an elastic member, located in the cavity for telescopic movement, where the elastic member is in contact with both the bearing member and the housing sleeve;
an auxiliary ball, located in the cavity for telescopic movement, where the auxiliary ball is located on a side of the bearing member facing away from the elastic member, a plurality of auxiliary balls are provided, and the plurality of auxiliary balls are spaced apart from each other along a circumferential direction of the housing sleeve; and
a main ball, located on a side of the auxiliary ball facing away from the bearing member,
where when the mounting member is in the extended state, a side of the main ball facing the elastic member abuts against the auxiliary ball, and a side of the main ball facing away from the elastic member abuts against the housing sleeve to restrict the main ball from being detached from the cavity for telescopic movement; the side of the main ball facing away from the elastic member partially protrudes from the housing sleeve to enable the main ball to be partially located in the protection nozzle; when the mounting member is in the retracted state, the main ball is retracted into the cavity for telescopic movement, and the protection nozzle is capable of being removed from between the two mounting members.

In the embodiments of the present disclosure, the main ball is capable of being switched between the extended state and the retracted state under the action of an elastic force transmitted by the elastic member and a pressing force from the protection nozzle, thereby achieving rapid folding and mounting of the protection nozzle.

In an embodiment, the protection body and a plurality of shields jointly define one protection cavity in an enclosing manner.

In the embodiments of the present disclosure, since the protection body and the plurality of shields jointly define one protection cavity in an enclosing manner, the partitioning of the protection cavity can be reduced. The protection cavity jointly defined by the protection body and the plurality of shields in an enclosing manner achieves a relatively large space in the protection cavity, such that the welding nozzle can smoothly extend into the welding zone through the protection cavity for performing welding operations.

A second aspect of the embodiments of the present disclosure provides a welding system. The welding system includes:
the welding protection device according to any one of the above embodiments;
a conveying device, configured to convey a battery unit to be welded to a welding position, where the welding protection device is configured to move to a position corresponding to a battery cell located at the welding position, such that each welding zone is located at a position at which a corresponding terminal post of the battery cell in the battery unit is located; and
a welding device, having a welding nozzle, where the welding nozzle is configured to pass through the welding zone to weld a conductor to the terminal post.

In the embodiments of the present disclosure, the battery unit to be welded is conveyed to the welding position by the conveying device, the welding protection device is used to protect the battery unit, and the welding nozzle extends into the welding zone to complete the welding between a conductor and the terminal post. Through the movement of the shield and the protection assembly, the welding of terminal posts with varying spacings therebetween is achieved, and the battery unit is kept during the welding process.

A third aspect of the embodiments of the present disclosure provides a position adjustment method. The method includes:
driving a protection assembly and/or a protection body to move by a drive assembly such that at least one protection assembly and a corresponding shield move.

In the embodiments of the present disclosure, the protection assembly moves to adapt to the welding of terminal posts with varying spacings therebetween, and the shield moves to adapt to changes in the space of the housing caused by the movement of the protection assembly, such that the battery unit can be better protected.

In an embodiment, driving the protection assembly and/or the protection body to move by the drive assembly such that at least one protection assembly and the corresponding shield move includes:
driving a first protection assembly to move along a first direction by a first drive component, to drive corresponding shields on two sides to move along the first direction.

In the embodiments of the present disclosure, the first protection assembly moves to adapt to the welding of terminal posts with varying spacings therebetween along the first direction, and corresponding shields on the two sides move to extend and retract along the first direction, such that the corresponding shields on the two sides can adapt to changes in the space of the housing caused by the movement of the first protection assembly, thereby better protecting the battery unit.

In an embodiment, driving the protection assembly and/or the protection body to move by the drive assembly such that at least one protection assembly and the corresponding shield move includes:
driving two protection bodies to move closer to or away from each other along a third direction by a second drive component, to drive a shield between the two protection bodies to move along the third direction.

In the embodiments of the present disclosure, the protection body is driven to move to drive the corresponding protection assembly to move, so as to adapt to the welding of terminal posts with varying spacings therebetween along the third direction. The shield between the two protection bodies moves to extend and retract along the third direction, such that the shield between the two protection bodies can adapt to changes in the space of the housing caused by the movement of the protection body along the third direction, thereby better protecting the battery unit.

A fourth aspect of the embodiments of the present disclosure provides a welding method. The method includes:
driving a protection assembly and/or a protection body to move by a drive assembly, such that at least one protection assembly and a corresponding shield move, where the moving protection assembly is configured to adjust a spacing between welding zones of a plurality of protection assemblies to adapt to welding of terminal posts with varying spacings therebetween; and
sequentially extending a welding nozzle of a welding device into each welding zone, to weld a conductor to the terminal post corresponding to each welding zone.

In the embodiments of the present disclosure, the protection assembly and the shield move to achieve the welding of terminal posts with varying spacings therebetween and protection of the battery unit during the welding process. The welding nozzle extends into the welding zone to perform welding so as to achieve the welding between a conductor and the terminal post.

In an embodiment, the welding method further includes:
providing protective gas to the welding zone through an air pipe; and
extracting welding materials generated during a welding process from the welding zone through the air pipe.

In the embodiments of the present disclosure, high-temperature metals during the welding process are protected by the protective gas, thereby improving welding quality. The welding materials are extracted from the welding zone through the air pipe, such that the welding zone can be better cleaned.

The present disclosure has the following beneficial effects:
According to the welding protection device of the embodiments of the present disclosure, the drive assembly drives the protection assembly and/or the protection body to move so as to move at least one protection assembly and the corresponding shield, and change the position of the protection assembly, thereby changing the spacing between the corresponding protection assemblies and the spacing between the welding zones of the corresponding protection assemblies. The spacing between the corresponding welding zones is adjusted, such that the spacing between the corresponding welding zones can be adapted to the spacing between the terminal posts to be welded, and thus the welding nozzle of the welding device can extend into each welding zone to weld the conductor to the corresponding terminal post. Since the extending and retracting direction of each shield is arranged along the movement direction corresponding to the protection assembly, the telescopic shield can adapt to changes in the movement space of the housing caused by the movement of the protection assembly. The shield can separate, to the greatest extent possible, the protection cavity from the rear side of the housing facing away from the protection cavity when the protection assembly moves, and by means of the housing and the telescopic shield, welding materials such as fumes and high-temperature molten substances generated during welding are retained in the protection cavity to the greatest extent possible, thereby restricting the welding materials from escaping from the protection cavity and preventing, to the greatest extent possible, the welding materials from damaging the portions of the battery unit outside the welding zone, which is beneficial for better protecting the battery unit during the welding process. Therefore, the welding protection device according to the embodiments of the present disclosure is capable of accommodating the welding of terminal posts with varying spacings therebetween while providing protection.

### BRIEF DESCRIPTION OF THE DRAWINGS

By reading the detailed description of the preferred embodiments below, various additional advantages and benefits will become clear to those of ordinary skill in the art. The drawings are provided solely for the purpose of illustrating the preferred embodiments and shall not be construed as limiting the scope of the present disclosure. Furthermore, the same reference numerals in all the drawings denote identical components. In the drawings:
FIG. 1 is a schematic structural diagram of a welding protection device according to an embodiment of the present disclosure, where in order to clearly illustrate the internal structure, the top plate of the protection body is not illustrated in the figure;
FIG. 2 is a schematic structural diagram of a welding protection device according to an embodiment of the present disclosure, where the second drive component is omitted in the figure, and the top plate of the protection body is not illustrated in the figure;
FIG. 3 is an enlarged view of portion A in FIG. 2;
FIG. 4 is a schematic structural diagram of a welding protection device according to an embodiment of the present disclosure, where the top plate of the protection body and a relatively intact protection cavity are illustrated;
FIG. 5 is an assembly diagram of a protection body, a corresponding shield, a corresponding first drive component, and a corresponding protection assembly according to an embodiment of the present disclosure, where a side of the protection body facing the protection cavity is illustrated;
FIG. 6 is an assembly diagram of a protection body, a corresponding shield, and a corresponding protection assembly according to an embodiment of the present disclosure, where a side of the protection body facing away from the protection cavity is illustrated;
FIG. 7 is an assembly diagram of a protection body, a corresponding shield, a corresponding first drive component, and a corresponding protection assembly according to an embodiment of the present disclosure, where a side of the protection body facing the protection cavity and a cutting position are illustrated, while the air pipe is omitted in the figure;
FIG. 8 is a cross-sectional view along line B-B in FIG. 7;
FIG. 9 is an enlarged view of portion D in FIG. 8;
FIG. 10 is a cross-sectional view along line C-C in FIG. 7;
FIG. 11 is an enlarged view of portion E in FIG. 10;
FIG. 12 is a schematic diagram of a shield located in a guide groove and supported on a bearing portion of a protection body according to an embodiment of the present disclosure;
FIG. 13 is a schematic structural diagram of a mounting member according to an embodiment of the present disclosure;
FIG. 14 is a schematic diagram of a shield in a guide groove and a shield in an auxiliary groove, the structures of which are omitted in FIG. 1;
FIG. 15 is a first flowchart of a position adjustment method according to an embodiment of the present disclosure;
FIG. 16 is a second flowchart of a position adjustment method according to an embodiment of the present disclosure;
FIG. 17 is a first flowchart of a welding method according to an embodiment of the present disclosure; and

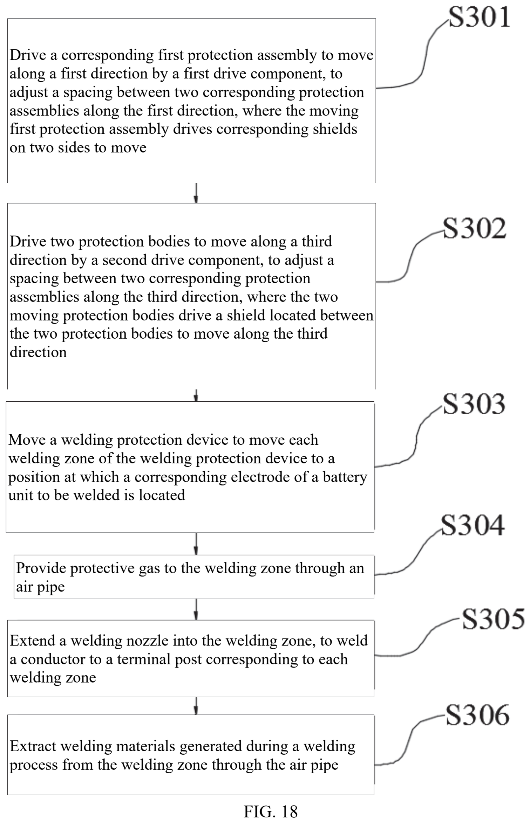

FIG. 18 is a second flowchart of a welding method according to an embodiment of the present disclosure.

### Description of the reference numerals:

housing 1; protection body 11; guide groove 111; auxiliary groove 112; bearing portion 113; shield 12; supporting body 121; folding member 122; folding plate 1221; target position 123; protection cavity 13; first protection assembly 21; second protection assembly 22; welding zone 23; base 201; positioning portion 2011; base body 2012; mounting member 2013; housing sleeve 2113; cavity for telescopic movement 21131; bearing member 2213; elastic member 2313; auxiliary ball 2413; main ball 2513; protection nozzle 202; mounting portion 2021; air extraction pipe 2031; protective gas pipe 2032; drive assembly 3; first drive component 31; second drive component 32.

### DETAILED DESCRIPTION

Embodiments of the technical solutions of the present disclosure will be described in detail below with reference to the drawings. The following embodiments are only used to more clearly illustrate the technical solutions of the present disclosure, and therefore, are only exemplary and do not limit the protection scope of the present disclosure.

Unless otherwise defined, all technical and scientific terms used herein have the same meaning as commonly understood by those skilled in the art to which the present disclosure belongs. The terms used herein are intended to merely describe the specific embodiments, rather than to limit the present disclosure. The terms "include", "comprise", "have", and "provided with", and any other variations thereof in the embodiments of the present disclosure are intended to cover non-exclusive inclusions.

In the description of the embodiments of the present disclosure, the terms "first", "second", "third", and the like are merely intended to distinguish different objects and should not be understood as any indication or implication of relative importance or any implicit indication of the number, specific sequence, or primary-secondary relationship of the technical features indicated. In the description of the embodiments of the present disclosure, unless otherwise specifically defined, "plurality of" means two or more.

Reference in the present application to "embodiment" means that a particular feature, structure, or characteristic described in combination with the embodiment can be included in at least one embodiment of the present disclosure. The references of the word in the context of the specification do not necessarily refer to the same embodiment, nor to separate or alternative embodiments exclusive of other embodiments. It will be explicitly and implicitly understood by those skilled in the art that the embodiments described herein can be combined with other embodiments.

In the description of the embodiments of the present disclosure, the term "and/or" is merely a way to describe the associative relationship between associated objects, indicating that there are three possible relationships. For example, "A and/or B" may denote: the presence of A alone, the simultaneous presence of A and B, and the presence of B alone. In addition, the character "/" herein generally indicates "or" relationship between the associated objects before and after the "/".

In the description of the embodiments of the present disclosure, unless otherwise clearly specified and defined, the technical terms "mount", "interconnect", "connect", "fix", and the like should be interpreted in their broad senses. For example, they may be a fixed connection, a detachable connection, or an integral connection; a mechanical connection or an electrical connection; or a direct connection, an indirect connection via an intermediate, a communication between interiors of two elements, or an interaction between two elements. For those of ordinary skill in the art, the specific meanings of the above terms in the embodiments of the present disclosure can be interpreted according to specific conditions.

In the description of the embodiments of the present disclosure, unless otherwise clearly specified and defined, the term "contact" should be interpreted in its broad senses, and the "contact" may refer to direct contact, contact via an intermediate medium layer, contact with substantially no interaction force between two elements in contact, or contact with an interaction force between two elements in contact.

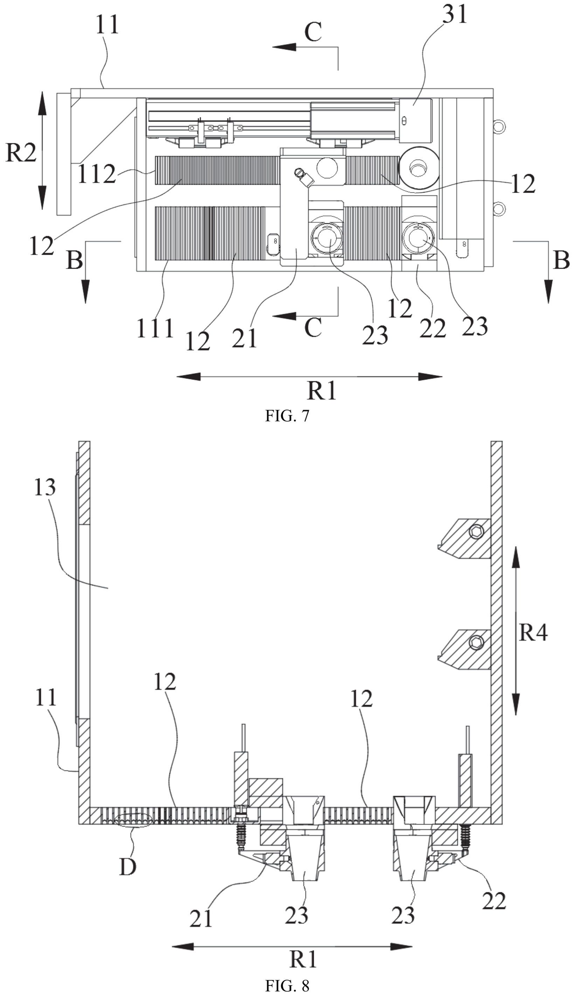

In the description of the embodiments of the present disclosure, orientations or positional relationships indicated by the terms "upper", "lower", "top", and "bottom" are orientations or positional relationships based on those shown in FIG. 8 and FIG. 10 to FIG. 12. It should be understood that they are merely for the convenience of describing the present disclosure and simplifying the description, rather than indicating or implying that the device or element referred to must have a specific orientation or be constructed and operated in the specific orientation, and thus should not be construed as a limitation to the present disclosure.

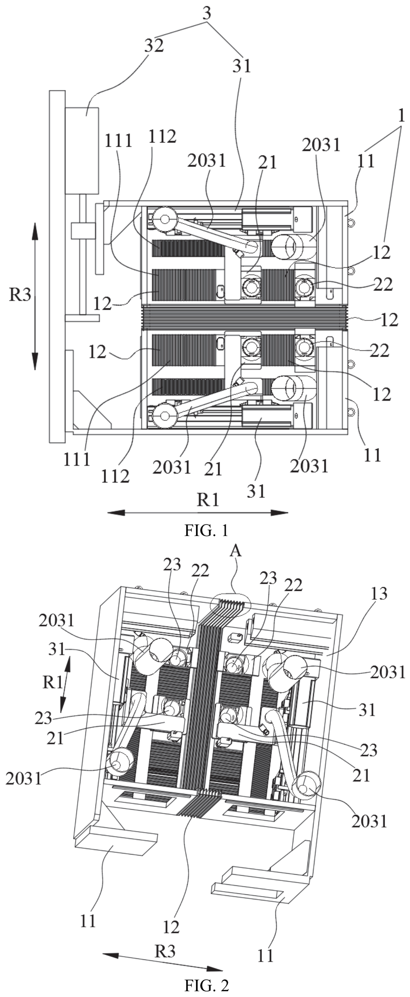

In the embodiments of the present disclosure, referring to FIG. 1, FIG. 2, FIG. 7, and FIG. 8, the first direction is the direction indicated by the arrow R1 in the figure.

In the embodiments of the present disclosure, referring to FIG. 7, the second direction is the direction indicated by the arrow R2 in the figure.

In the embodiments of the present disclosure, referring to FIG. 1, FIG. 2, and FIG. 4, the third direction is the direction indicated by the arrow R3 in the figure.

In the embodiments of the present disclosure, referring to FIG. 8 and FIG. 10 to FIG. 12, the upper-lower direction is the direction indicated by the arrow R4 in the figure.

At present, new energy batteries are increasingly applied in life and industry. New energy batteries are not only applied in energy storage power systems such as hydropower, thermal power, wind power and solar power stations, but are also widely applied in electric transportation vehicles such as electric bicycles, electric motorcycles, electric vehicles, as well as in aerospace and other fields. With the continuous expansion of the application field of power batteries, the market demand for power batteries is also constantly increasing.

As a part of the inventive concept of the present disclosure, before the embodiments of the present disclosure are described, it is necessary to analyze the reason why, in the related art, welding protection devices are difficult to accommodate the welding of terminal posts with varying spacings therebetween while providing protection, so as to derive the technical solutions of the embodiments of the present disclosure through appropriate analysis.

In the related art, a battery unit to be welded includes a plurality of battery cells, the terminal posts of the plurality of battery cells are connected in series and/or in parallel by conductors, and the conductors need to be welded to the terminal posts by a welding device. Illustratively, the conductor welded to the terminal post is a connecting sheet or a busbar. The protection assembly of the welding protection device is disposed on the housing, and the welding nozzle of the welding device extends into the welding zone of the protection assembly to weld the conductor to the terminal post. The welding nozzle extends into the welding zone from one side of the protection cavity of the housing and welds the terminal post on the other side, and the protection assembly penetrates through the housing. Illustratively, the protection assembly includes a copper nozzle, and the welding zone penetrates through the copper nozzle. When the protection assembly is disposed on the housing and cannot move, the welding protection device is difficult to adjust the spacing between the welding zones of the protection assemblies and is difficult to accommodate the welding of terminal posts with varying spacings therebetween while providing protection. When the protection assembly is disposed on the housing and can move, a corresponding movement space needs to be reserved on the housing to enable the protection assembly to move. The movement space that enables the protection assembly to move may change during the movement of the protection assembly, thereby destroying the protection of the protection cavity. Therefore, fumes or high-temperature molten substances that escape into the protection cavity during the welding process may diffuse from the protection cavity toward the battery side through the movement space that enables the protection assembly to move, which may damage other portions of the welded battery unit outside the welding zone. As a result, it is difficult to protect the welded battery unit. The difficulty in accommodating the welding of terminal posts with varying spacings therebetween while providing protection, as referred to herein, mainly lies in the potential damage to other portions of the battery unit outside the welding zone.

In the embodiments of the present disclosure, when the movement of the protection assembly is not affected, the movement space that is located on the housing 1 and enables the protection assembly to move is sealed to a certain extent, to prevent welding materials such as fumes and high-temperature molten substances from escaping from the protection cavity 13 through space for the movement of the protection assembly and diffusing toward the battery unit side. In this way, the protection during welding of terminal posts with varying spacings therebetween can be accommodated.

The solutions of the embodiments of the present disclosure can be applied to, but is not limited to, the welding of terminal posts of a plurality of battery cells in a battery unit to conductors. The solutions can also be applied to the welding of other objects that need to be protected during welding.

The electric device is a device that uses electric energy as an energy source to perform corresponding functions by consuming the electric energy. Illustratively, the electric device may be, but is not limited to, a mobile phone, a tablet, a laptop computer, an electric toy, an electric tool, an electric bike, an electric vehicle, a ship, a spacecraft, or the like. The electric toy may include a stationary or mobile electric toy, such as a game console, an electric car toy, an electric ship toy, and an electric airplane toy. The spacecraft may include an airplane, a rocket, a space shuttle, a spaceship, and the like.

The present disclosure is illustrated by taking a vehicle as an example of the electric device according to an embodiment of the present disclosure.

The vehicle according to an embodiment of the present disclosure may be a fuel vehicle, a gas vehicle, or a new energy vehicle. The new energy vehicle may be a pure electric vehicle, a hybrid vehicle, an extended-range vehicle, or the like. A battery pack is disposed inside the vehicle, and the battery pack may be disposed at the bottom, head, or rear of the vehicle. The battery pack may be configured to supply power to the vehicle. For example, the battery pack may serve as an operation power source for the vehicle. The vehicle may further include a controller and a motor. The controller may be configured to control the battery pack to supply power to the motor. For example, the battery pack may be used to satisfy operation power demands of the vehicle during start-up, navigation, and driving.

In some embodiments of the present disclosure, the battery pack may not only serve as the operation power source for the vehicle, but also as a driving power source for the vehicle to, instead of or in part instead of fuel or natural gas, provide driving power for the vehicle.

The terminal posts of the plurality of battery cells of the battery unit are electrically connected via the connecting sheet or the busbar, and then the battery units are processed to form a battery pack.

If a plurality of battery cells are provided, the plurality of battery cells may be connected in series, in parallel, or in series-parallel. The series-parallel connection means that both series connection and parallel connection are present in the connection of the plurality of battery cells. The welding device is used to weld conductors to the terminal posts of a plurality of battery cells to achieve series connection or parallel connection or series-parallel connection among the plurality of battery cells. The battery cells of the battery unit are connected in series, in parallel, or in series-parallel by the conductors to form a battery module. A plurality of battery modules are then connected in series, in parallel, or in series-parallel to form a whole, and the whole formed by connecting the plurality of battery modules in series, in parallel, or in series-parallel is placed into a case. The battery pack may further include other structures. For example, the battery pack may further include a busbar component for achieving electrical connection among the plurality of battery cells.

The battery cell refers to a basic unit that enables the mutual conversion between chemical energy and electric energy.

In the embodiments of the present disclosure, the battery cell may be a secondary battery. The secondary battery refers to a battery cell that can continue to be used by activating the active material through charging after the battery cell is discharged.

In the embodiments of the present disclosure, the battery cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead storage battery, and the like. This is not limited in the embodiments of the present disclosure.

The welding system according to the embodiments of the present disclosure includes a welding protection device, a conveying device, and a welding device. The conveying device is used to convey a battery unit to be welded to a welding position. The welding device includes a welding nozzle. The welding nozzle is configured to weld a conductor to the terminal post of a battery cell of the battery unit at a welding position. The battery cell in the battery unit is protected by the welding protection device during the welding process of the conductor and the terminal post.

Illustratively, the conveying device may be a belt conveyor.

Illustratively, the welding device may be a laser welding machine.

Illustratively, the conductor may be a connecting sheet or a busbar.

Illustratively, the polarity of the terminal post may be positive or negative.

Referring to FIG. 1, FIG. 2, and FIG. 3, the welding protection device according to the embodiments of the present disclosure includes a housing 1, a protection assembly, and a drive assembly 3. The housing 1 includes a protection body 11 and a shield 12. The protection body 11 and the shield 12 define a protection cavity 13 in an enclosing manner, and the shield 12 is capable of extending and retracting. The protection assembly is disposed on the housing 1, a plurality of protection assemblies are provided, the protection assembly has a welding zone 23 in communication with the protection cavity 13, the welding zone 23 penetrates through the protection assembly, and the welding zone 23 is configured for a welding nozzle to pass therethrough for welding. The drive assembly 3 is disposed on the protection body 11, the drive assembly 3 is configured to drive the protection assembly and/or the protection body 11 to move, such that at least one protection assembly and the shield 12 move, and the extending and retracting direction of each shield 12 is arranged along the movement direction corresponding to the protection assembly, so as to restrict welding materials from escaping from the protection cavity 13.

The protection cavity 13 defined by the protection body 11 and the shield 12 in an enclosing manner is mainly configured to protect the battery cell of the battery unit, so as to prevent, to the greatest extent possible, welding materials such as fumes and high-temperature molten substances generated during welding from diffusing to other portions of the battery unit outside the welding zone 23, which could otherwise cause damage to the battery unit.

It should be noted that the high-temperature molten substances are mainly high-temperature molten substances stripped from the weld seam and/or the welded base material.

Referring to FIG. 2, the welding of the terminal post and the conductor by the welding nozzle is mainly performed in the welding zone 23, and the housing 1 serves to protect other portions of the battery unit outside the welding zone 23.

Illustratively, referring to FIG. 1, at least one shield 12 is provided. For example, one, two, three, four, or five shields 12 may be provided.

Illustratively, referring to FIG. 1, FIG. 2, and FIG. 5 to FIG. 7, the protection assembly may be disposed on the protection body 11. For example, a part of the protection assembly is connected to the protection body 11.

Illustratively, referring to FIG. 1, FIG. 2, FIG. 5, FIG. 7, and FIG. 10, the protection assembly may be disposed on the shield 12 and supported by the drive assembly 3. For example, a part of the protection assembly is connected to the shield 12, and the part of the protection assembly moves to drive the corresponding shield 12 to extend and retract.

Illustratively, referring to FIG. 1, FIG. 2, and FIG. 4, the drive assembly 3 may drive the protection body 11 to move, such that the corresponding protection assembly moves with the protection body 11.

Illustratively, referring to FIG. 1, FIG. 2, and FIG. 5 to FIG. 8, the drive assembly 3 can drive the protection assembly to move.

Illustratively, the welding protection device is configured to move to a position corresponding to a battery cell located at the welding position, such that each welding zone 23 is located at a position at which a corresponding terminal post of the battery cell in the battery unit is located. The welding nozzle is configured to pass through the welding zone 23 to weld the conductor to the terminal post.

In the embodiments of the present disclosure, the drive assembly 3 drives the protection assembly and/or the protection body 11 to move so as to move at least one protection assembly and the corresponding shield 12, and change the position of the protection assembly, thereby changing the spacing between the corresponding protection assemblies and the spacing between the welding zones 23 of the corresponding protection assemblies. The spacing between the corresponding welding zones 23 is adjusted, such that the spacing between the corresponding welding zones 23 can be adapted to the spacing between the terminal posts to be welded, and thus the welding nozzle of the welding device can extend into each welding zone 23 to weld the conductor to the corresponding terminal post. Since the extending and retracting direction of each shield 12 is arranged along the movement direction corresponding to the protection assembly, the telescopic shield 12 can adapt to changes in the movement space of the housing 1 caused by the movement of the protection assembly. The shield 12 can separate, to the greatest extent possible, the protection cavity 13 from the side of the housing 1 facing away from the protection cavity 13 when the protection assembly moves, and by means of the housing 1 and the telescopic shield 12, welding materials such as fumes and high-temperature molten substances generated during welding are retained in the protection cavity 13 to the greatest extent possible, thereby restricting the welding materials from escaping from the protection cavity 13 and preventing, to the greatest extent possible, the welding materials from damaging the portions of the battery unit outside the welding zone 23, which is beneficial for better protecting the battery unit during the welding process. Therefore, the welding protection device according to the embodiments of the present disclosure is capable of accommodating the welding of terminal posts with varying spacings therebetween while providing protection.

In an embodiment, referring to FIG. 2, FIG. 3, FIG. 8, and FIG. 9, the shield 12 includes a supporting body 121 and a folding member 122. The supporting body 121 is disposed on the corresponding protection body 11 and/or the corresponding protection assembly, a plurality of supporting bodies 121 are provided, and the plurality of supporting bodies 121 are sequentially spaced apart from each other. The folding member 122 is disposed on the supporting body 121, the folding member 122 is disposed between each two adjacent supporting bodies 121, and the folding member 122 and the corresponding supporting body 121 are capable of being folded relative to each other, such that the two adjacent supporting bodies 121 move closer to or away from each other.

The folding member 122 and the supporting body 121 are capable of being folded relative to each other, such that the two adjacent supporting bodies 121 move closer to or away from each other, thereby achieving telescopic movement of the shield 12. The direction in which the plurality of supporting bodies 121 are sequentially spaced apart from each other is the extending and retracting direction of the shield 12.

The supporting body 121 is disposed on the corresponding protection body 11 and/or the corresponding protection assembly, and the supporting body 121 of the corresponding shield 12 is supported by the protection body 11 and/or the protection assembly. Since the positions of the shield 12 are different, the shield 12 may be disposed on the protection body 11, or the shield 12 may be disposed on the protection assembly.

Illustratively, the supporting body 121 may be a rigid member.

Illustratively, the folding member 122 may be a flexible member or a rigid member.

Illustratively, the shield 12 may be a bellows cover.

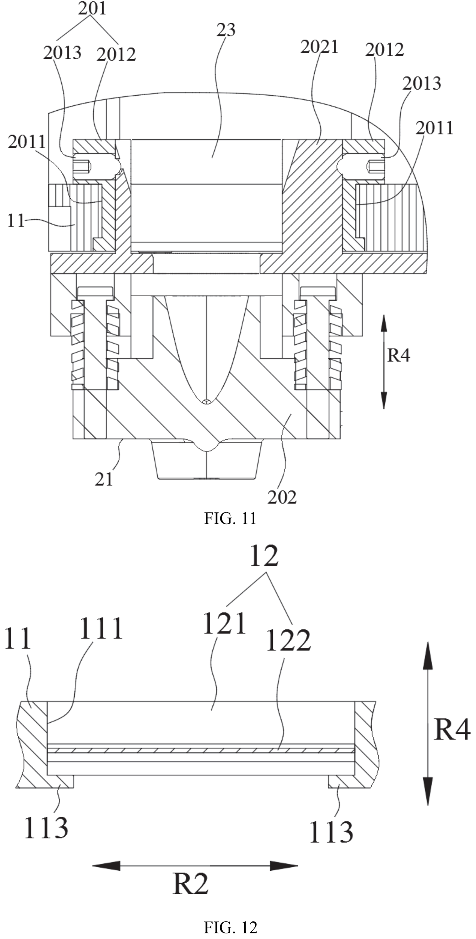

Illustratively, referring to FIG. 12, the protection body 11 includes a bearing portion 113, and the plurality of supporting bodies 121 slide along the bearing portion 113.

In the embodiments of the present disclosure, the folding member 122 and the supporting body 121 are capable of being folded relative to each other, such that the two adjacent supporting bodies 121 move closer to or away from each other. Therefore, the spacing between the two adjacent supporting bodies 121 is changed, thereby achieving extension and retraction of the shield 12 along the arrangement direction of the plurality of supporting bodies 121. Welding materials such as fumes and high-temperature molten substances generated during welding are isolated, to the greatest extent possible, to the side facing the protection cavity 13 by the supporting body 121 and the folding member 122.

It may be understood that the shield 12 is not limited to a structure in which the supporting body 121 and the folding member 122 are capable of being folded relative to each other. Illustratively, the plurality of supporting bodies 121 may sequentially overlap with each other, and each supporting body 121 may move relative to other corresponding supporting bodies 121.

In an embodiment, referring to FIG. 2, FIG. 3, FIG. 8, and FIG. 9, the folding member 122 of the shield 12 includes two interconnected folding plates 1221. The two folding plates 1221 are capable of being folded relative to each other, each of the folding plates 1221 is connected to a corresponding supporting body 121 of two adjacent supporting bodies 121, the folding plates 1221 and the corresponding supporting bodies 121 are capable of being folded relative to each other, a position at which the folding plates 1221 and the corresponding supporting bodies 121 are folded relative to each other is a target position 123, and an arrangement direction of a plurality of target positions 123 is consistent with an arrangement direction of a plurality of corresponding supporting bodies 121.

In the embodiments of the present disclosure, regardless of a rigid folding plate 1221 or a flexible folding plate 1221, since the arrangement direction of a plurality of target positions 123 is consistent with the arrangement direction of the corresponding plurality of supporting bodies 121, during a process in which the two folding plates 1221 are unfolded or folded to implement the extension and retraction of the shield 12, the corresponding supporting bodies 121 substantially move along the arrangement direction of the plurality of supporting bodies 121, and the supporting bodies 121 are arranged relatively orderly, thereby reducing the degree of misalignment of the supporting bodies 121. In addition, two folding plates 1221 are disposed between each two adjacent supporting bodies 121. When the arrangement direction of the plurality of target positions 123 is consistent with the arrangement direction of the corresponding plurality of supporting bodies 121, the folded thickness of the two folding plates 1221 between the two adjacent supporting bodies 121 allows the two adjacent supporting bodies 121 to retract toward each other to a relatively small spacing. Therefore, the stroke of the two adjacent supporting bodies 121 from being fully retracted to being fully extended is relatively large, that is, the shield 12 has a relatively large telescopic range. Therefore, in the case that the plurality of supporting bodies 121 are arranged orderly since the arrangement direction of the plurality of target positions 123 is consistent with the arrangement direction of the corresponding plurality of supporting bodies 121, the telescopic range of the shield 12 is increased due to the folding arrangement of the two folding plates 1221. Correspondingly, the adjustment range of the spacing between the plurality of protection assemblies is increased, and the adjustment range of the spacing between the welding zones 23 of the plurality of protection assemblies is increased, which is beneficial for adapting to the welding of terminal posts with varying spacings therebetween while providing protection within a relatively large spacing range.

It may be understood that the specific structural form of the folding member 122 is not limited. Illustratively, one folding plate 1221 may be provided. Illustratively, more than two folding plates 1221 may also be provided. For example, three, four, or five folding plates 1221 may be provided.

In an embodiment, referring to FIG. 1, FIG. 2, and FIG. 5 to FIG. 8, the drive assembly 3 includes a first drive component 31 disposed on the protection body 11, at least one of the protection assemblies is a first protection assembly 21, two opposite sides of the first protection assembly 21 are each provided with the shield 12, an arrangement direction of the shields 12 on the two sides is a first direction, the first drive component 31 drives the first protection assembly 21 to move along the first direction, and extending and retracting directions of the shields 12 on the two sides are arranged along the first direction.

Illustratively, the first drive component 31 may be a linear motor.

Illustratively, the first drive component 31 may include a rotary motor and a transmission apparatus. The transmission apparatus is configured to convert rotational motion of the motor into linear motion. For example, the transmission apparatus may be a screw-nut pair.

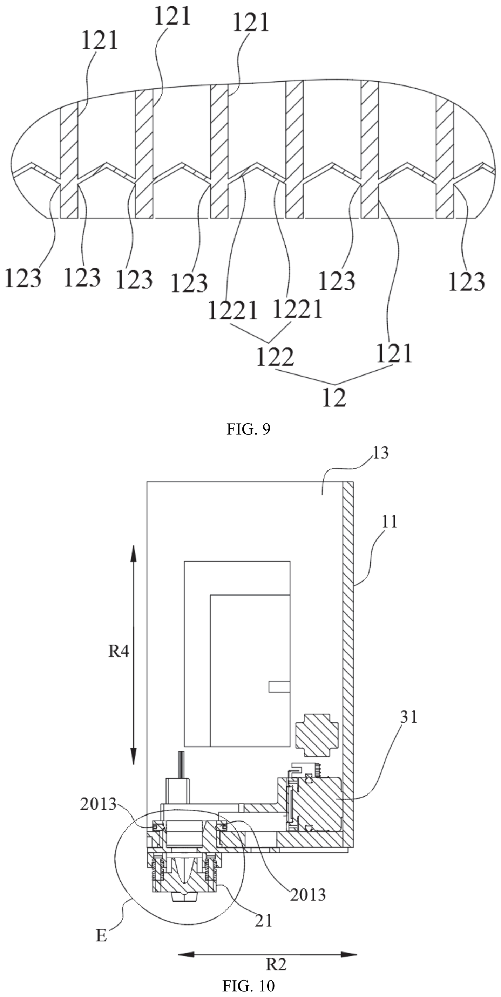

Illustratively, referring to FIG. 8 and FIG. 9, the supporting bodies 121 of the shield 12 that moves to extend and retract along the first direction are arranged along the first direction.

In the embodiments of the present disclosure, since the extending and retracting directions of the shields 12 on the two sides are arranged along the first direction, the first drive component 31 drives the first protection assembly 21 to move along the first direction. In the shields 12 on the two sides corresponding to the first protection assembly 21, when the spacing between a side of the first protection assembly 21 along the first direction and the protection body 11 is reduced, the shield 12 on the corresponding side is retracted along the first direction; and when the spacing between the other side of the first protection assembly 21 along the first direction and the protection body 11 is increased, the shield 12 on the corresponding side is extended along the first direction to fill the increased spacing. Since the shields 12 on the two sides can adapt to changes in the space on the two sides along the first direction during the movement of the first protection assembly 21, during the movement of the first protection assembly 21, the side of the corresponding shield 12 facing the protection cavity 13 and the side of the corresponding shield facing away from the protection cavity 13 can be well separated by the shield 12, which is beneficial for restricting, by the shield 12, welding materials such as fumes or high-temperature molten substances in the protection cavity 13 from diffusing outside, thereby protecting the battery unit and preventing the battery unit from being damaged during the welding process.

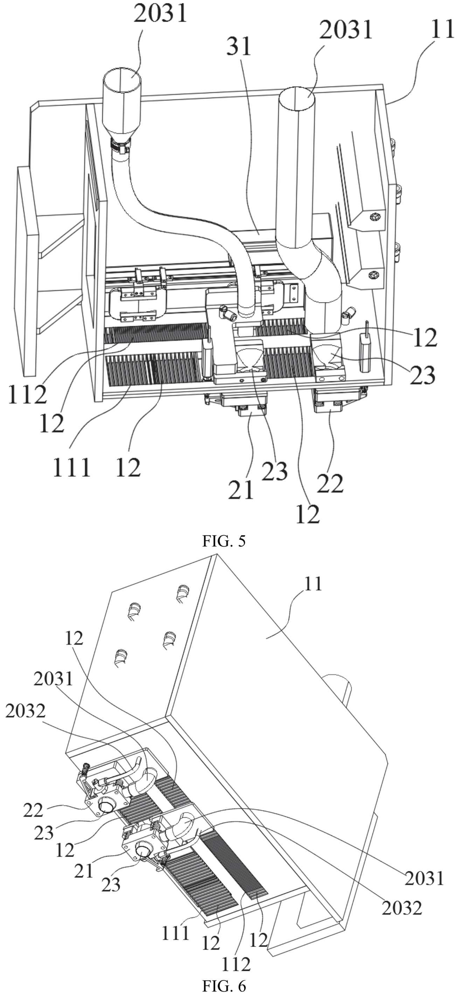

In an embodiment, referring to FIG. 5 to FIG. 7, FIG. 10, and FIG. 11, the protection body 11 is provided with a guide groove 111 and an auxiliary groove 112 spaced apart from each other, an arrangement direction of the guide groove 111 and the auxiliary groove 112 is a second direction, and the second direction is arranged to intersect with the first direction. The protection assembly includes a base 201, a protection nozzle 202, and an air pipe. The base 201 is disposed on the housing 1, the base 201 is provided with positioning portions 2011 spaced apart from each other along the second direction, and the corresponding positioning portion 2011 is located in the guide groove 111, such that the corresponding positioning portion 2011 is in positioning contact with the protection body 11 along the second direction. The protection nozzle 202 is at least partially located on a side of the base 201 facing away from the protection cavity 13, and the welding zone 23 penetrates through the base 201 and the protection nozzle 202. The protection nozzle 202 is provided with a mounting portion 2021 connected to the base 201. The corresponding mounting portion 2021 is located between two of the positioning portions 2011 along the second direction, and two opposite sides of the corresponding mounting portion 2021 along the first direction are each provided with the shield 12 located in the guide groove 111. The first drive component 31 is configured to drive the base 201 and/or the protection nozzle 202 to move along the first direction. The air pipe extends from a side of the housing 1 facing the protection cavity 13 to a side of the housing 1 facing away from the protection cavity 13, and the corresponding air pipe is disposed in the auxiliary groove 112 in a penetrating manner. Two opposite sides of the corresponding air pipe along the first direction are each provided with the shield 12 located in the auxiliary groove 112, and the end of the air pipe facing away from the protection cavity 13 is connected to the protection nozzle 202, to provide protective gas to the welding zone 23 and/or to evacuate the welding zone 23 to a negative pressure.

The corresponding positioning portion 2011 is located in the guide groove 111, such that the corresponding positioning portion 2011 is in positioning contact with the protection body 11 along the second direction. That is, the corresponding positioning portion 2011 is the positioning portion 2011 of the protection assembly that is capable of moving along the first direction.

Two opposite sides of the corresponding mounting portion 2021 along the first direction are each provided with the shield 12 located in the guide groove 111. That is, the corresponding mounting portion 2021 is the mounting portion 2021 of the protection assembly that is capable of moving along the first direction.

Two opposite sides of the corresponding air pipe along the first direction are each provided with the shield 12 located in the auxiliary groove 112. That is, the corresponding air pipe is the air pipe of the protection assembly that is capable of moving along the first direction.

Illustratively, the protection nozzle 202 may be a copper nozzle.

Illustratively, the copper nozzle may be a square copper nozzle or a circular copper nozzle.

Illustratively, referring to FIG. 1, FIG. 2, FIG. 5, and FIG. 6, one air pipe may be an air extraction pipe 2031, and is configured to extract welding materials such as fumes and high-temperature molten substances generated during the welding process from the corresponding welding zone 23.

Illustratively, referring to FIG. 6, one air pipe may be a protective gas pipe 2032, and is configured to provide protective gas to the corresponding welding zone 23 during the welding process, so as to protect the welding environment in the welding zone 23. For example, the protective gas may be nitrogen.

Illustratively, the first protection assembly 21 may move.

Illustratively, the base 201 may be connected to the protection body 11.

Illustratively, the base 201 may be connected to the shield 12, and the base 201 is supported by the first drive component 31.

Illustratively, the air pipe may include a rigid pipe and a hose connecting the rigid pipe to the protection nozzle 202.

Illustratively, referring to FIG. 7 to FIG. 9, the extending and retracting direction of the shield 12 in the guide groove 111 and the extending and retracting direction of the shield 12 in the auxiliary groove 112 are both arranged along the first direction.

Illustratively, referring to FIG. 7 to FIG. 9, the plurality of supporting bodies 121 of the shield 12 in the guide groove 111 are arranged along the first direction, and the plurality of supporting bodies 121 of the shield 12 in the auxiliary groove 112 are arranged along the first direction.

In the embodiments of the present disclosure, the positioning portion 2011 in the guide groove 111 cooperates with the protection body 11 to perform positioning along the second direction, such that the base 201 is restricted from moving relative to the corresponding protection body 11 along the second direction, and thus the protection body 11 can better guide the positioning portion 2011 in the guide groove 111 to move along the first direction. The protection nozzle 202 is provided with a mounting portion 2021 connected to the base 201. The mounting portion 2021 is located between two of the positioning portions 2011 along the second direction. The base 201 moves along the first direction to drive the protection nozzle 202 to move along the first direction. Therefore, the position of the welding zone 23 that penetrates through the protection nozzle 202 and the base 201 is correspondingly changed, thereby achieving the purpose of adjusting the spacing between a plurality of welding zones 23. When the welding nozzle extends into the welding zone 23 to weld the terminal post, the space between the side of the housing 1 facing away from the protection cavity 13 and the battery unit is relatively small, and the air pipe is mainly arranged in the protection cavity 13. The air pipe extends from the side of the housing 1 facing the protection cavity 13 to the side of the housing 1 facing away from the protection cavity 13, such that the air pipe partially extends to the side of the housing 1 facing away from the protection cavity 13 and is connected to the protection nozzle 202. Therefore, the position at which the air pipe evacuates the welding zone 23 and/or the position at which the air pipe provides protective gas to the welding zone 23 can be as close as possible to the post terminal. The air pipe is disposed in the auxiliary groove 112 in a penetrating manner, and the auxiliary groove 112 and the guide groove 111 are arranged along the second direction. Correspondingly, the air pipe and the protection nozzle 202 are arranged along the second direction, and the position of the air pipe does not occupy the space of the protection nozzle 202 along the first direction. Therefore, the moving protection assembly has a relatively large movement range along the first direction. The two positioning portions 2011 of the base 201 being in positioning contact with the protection body 11 along the second direction is mainly configured to position the protection nozzle 202 and the welding zone 23 penetrating through the protection nozzle 202. Positioning requirements for the air pipe are not high, and precise positioning is not required. Since the air pipe is located in the auxiliary groove 112, the air pipe is not located between the two positioning portions 2011 along the second direction. The span between the two positioning portions 2011 and the span of the guide groove 111 along the second direction are relatively small, such that the positioning portion 2011 and the protection body 11 can be positioned more accurately along the second direction. Two opposite sides of the mounting portion 2021 along the first direction are each provided with the shield 12 located in the guide groove 111 to prevent, by the shield 12 in the guide groove 111, welding materials in the protection cavity 13 from escaping from the protection cavity 13 through the guide groove 111. Two opposite sides of the air pipe along the first direction are each provided with the shield 12 located in the auxiliary groove 112 to prevent, by the shield 12 in the auxiliary groove 112, welding materials in the protection cavity 13 from escaping from the protection cavity 13 through the auxiliary groove 112, thereby better protecting the battery cell during the welding process.

It may be understood that the embodiments of the present disclosure are not limited to a structure in which the guide groove 111 and the auxiliary groove 112 are both provided. Illustratively, the protection body 11 may not be provided with the auxiliary groove 112 and the shield 12 in the corresponding auxiliary groove 112, the positioning portion 2011 and the mounting portion 2021 are both located in the guide groove 111, and the air pipe penetrates through the guide groove 111.

In an embodiment, referring to FIG. 1, FIG. 2, and FIG. 5 to FIG. 8, the at least one of the protection assemblies is a second protection assembly 22, the second protection assembly 22 and the first protection assembly 21 are spaced apart from each other along the first direction, the second protection assembly 22 is connected to the protection body 11, and in the shields 12 on the two sides, the shield 12 on one side is connected between the first protection assembly 21 and the second protection assembly 22, and the shield 12 on the other side is connected between the first protection assembly 21 and the protection body 11.

The second protection assembly 22 is connected to the protection body 11, and the second protection assembly 22 does not move relative to the corresponding protection body 11.

In the embodiments of the present disclosure, the spacing between the first protection assembly 21 and the second protection assembly 22 along the first direction can be adjusted by driving the first protection assembly 21 to move, and the second protection assembly 22 may not move. The second protection assembly 22 is connected to the protection body 11, such that the assembly structure between the second protection assembly 22 that does not move and the protection body 11 can be simplified. The shield 12 on the one side is connected between the first protection assembly 21 and the second protection assembly 22, and the second protection assembly 22 is used to connect the corresponding shield 12, which is beneficial for simplifying the structure of the protection body 11.

It may be understood that the embodiments of the present disclosure are not limited to a structure in which the first protection assembly 21 and the second protection assembly 22 are both provided. Illustratively, the case may be that the first drive component 31 drives the two first protection assemblies 21 arranged along the first direction to move, while the second protection assembly 22 is not provided.

It may be understood that, in addition to the case of directly driving the corresponding first protection assembly 21 to move by the first drive component 31, the case may further be that the protection body 11 drives the corresponding protection assembly to move by means of driving the protection body 11 to move.

In an embodiment, referring to FIG. 1, FIG. 2, and FIG. 4, the drive assembly 3 includes a second drive component 32 disposed on the protection body 11, two protection bodies 11 are provided, a direction in which the two protection bodies 11 are spaced apart from each other is a third direction, the shield 12 is correspondingly connected between the two protection bodies 11, the extending and retracting direction of the shield 12 between the two protection bodies 11 is arranged along the third direction, the two protection bodies 11 are both disposed on the second drive component 32, and the second drive component 32 drives the two protection bodies 11 to move along the third direction, such that protection assemblies corresponding to the two protection bodies 11 move closer to or away from each other along the third direction.

Illustratively, when the second drive component 32 drives the protection body 11 to move to drive the corresponding protection assembly to move, the plurality of protection assemblies corresponding to each protection body 11 may all be the second protection assembly 22.

Illustratively, when the second drive component 32 drives the protection body 11 to move to drive the corresponding protection assembly to move, the plurality of protection assemblies corresponding to each protection body 11 may all be the first protection assembly 21.

Illustratively, referring to FIG. 1, FIG. 2, and FIG. 5 to FIG. 8, when the second drive component 32 drives the protection body 11 to move to drive the corresponding protection assembly to move, there may be both the first protection assembly 21 and the second protection assembly 22 in the plurality of protection assemblies corresponding to each protection body 11.

Illustratively, referring to FIG. 1, FIG. 2, and FIG. 5 to FIG. 7, the third direction and the second direction are arranged in the same direction, that is, the arrangement direction of the two protection bodies 11 is consistent with the arrangement direction of the guide groove 111 and the auxiliary groove 112 of each protection body 11.

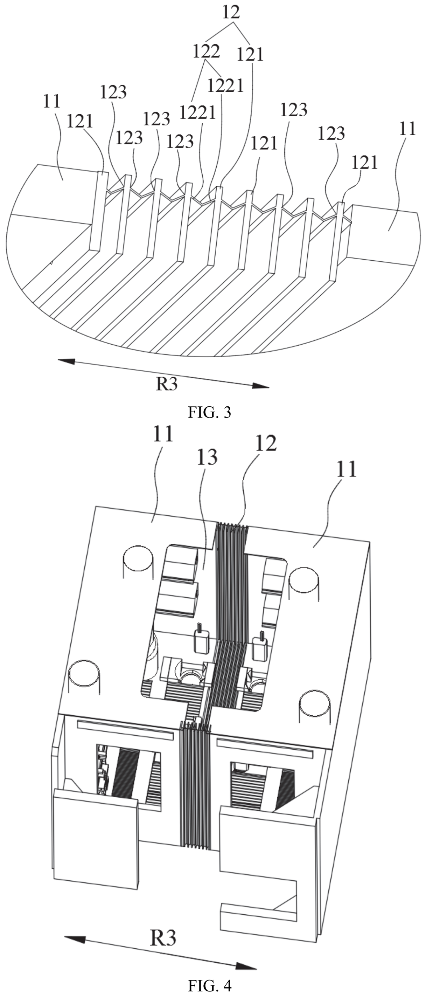

Illustratively, referring to FIG. 2 and FIG. 3, the plurality of supporting bodies 121 of the shield 12 between the two protection bodies 11 are arranged along the third direction.

Illustratively, the second drive component 32 may include two motors that independently drive the two protection bodies 11 to move, respectively.

Illustratively, referring to FIG. 1, the second drive component 32 may include a motor and a transmission apparatus. The motor drives the transmission apparatus to move to drive the two protection bodies 11 to move closer to or away from each other.

Illustratively, referring to FIG. 1, the transmission apparatus may be a screw-nut pair, and the motor drives the screw-nut pair to rotate, such that the screw-nut pair drives one of the protection bodies 11 to move closer to or away from the other of the protection bodies 11. For example, the motor is disposed on one of the protection bodies 11, and the motor drives the screw-nut pair to drive the other of the protection bodies 11 to move. For example, the screw-nut pair has right-hand and left-hand threads, and the motor drives the screw-nut pair to rotate to respectively drive the two protection bodies 11 to move, thereby enabling the two protection bodies 11 to move closer to or away from each other.

In the embodiments of the present disclosure, the second drive component 32 drives the two protection bodies 11 to move along the third direction to enable the two protection bodies 11 to move closer to or away from each other, thereby driving the corresponding protection assemblies to move, so as to achieve the adjustment of the spacing between the protection assemblies, and the adjustment of the spacing between the welding zones 23 corresponding to the protection assemblies. The two protection bodies 11 move along the third direction, and the space between the two protection bodies 11 along the third direction correspondingly increases or decreases. Since the extending and retracting direction of the shield 12 between the two protection bodies 11 is arranged along the third direction, the expansion and contraction of the shield 12 between the two protection bodies 11 along the third direction adapts to the increase or decrease of the space between the two protection bodies 11 along the third direction, such that the shield 12 is capable of restricting welding materials in the protection cavity 13 from escaping from the protection cavity 13 through the spacing between the two protection bodies 11, thereby better protecting the battery unit during the welding process.

In an embodiment, referring to FIG. 7, FIG. 10, and FIG. 11, the protection assembly includes a base 201 and a protection nozzle 202. The base 201 is disposed on the housing 1. The base 201 includes a base body 2012 and a plurality of mounting members 2013 disposed on the base body 2012. At least two of the mounting members 2013 are arranged opposite to each other, and the mounting members 2013 are capable of extending and retracting. The first drive component 31 is configured to drive the base body 2012 of the base 201 to move along the first direction. The protection nozzle 202 is connected to the base body 2012 of the base 201, the welding zone 23 penetrates through the protection nozzle 202 and the base body 2012 of the base 201, the mounting member 2013 is capable of being at least partially located in the protection nozzle 202 in an extended state, such that the protection nozzle 202 is mounted between two mounting members 2013 arranged opposite to each other; the mounting members 2013 are capable of being switched from the extended state to a retracted state under the action of an external force, such that the protection nozzle 202 is detached from the mounting members 2013; and the drive assembly 3 is configured to drive at least one of the protection body 11, the protection nozzle 202 and the base body 2012 of the base 201 to move.

Illustratively, the base body 2012 of the base 201 may be connected to the protection body 11.

Illustratively, the base body 2012 of the base 201 may be connected to the shield 12, and the base body 2012 of the base 201 is supported by the first drive component 31.

Illustratively, the protection nozzle 202 may be a copper nozzle.

Illustratively, the copper nozzle may be a square copper nozzle or a circular copper nozzle.

Illustratively, referring to FIG. 7, FIG. 10, and FIG. 11, the positioning portion 2011 is formed on the base body 2012.

Illustratively, referring to FIG. 7, FIG. 10, and FIG. 11, the at least two mounting members 2013 are arranged opposite to each other along the second direction.

Illustratively, the external force borne by the mounting member 2013 may be a pressing force from the protection nozzle 202.

In the embodiments of the present disclosure, since the mounting members 2013 arranged opposite to each other on the base body 2012 are switched between the extended state and the retracted state, the protection nozzle 202 clamped between the two mounting members 2013 arranged opposite to each other is capable of being conveniently disassembled and assembled, thereby facilitating the replacement of different copper nozzles based on actual needs.

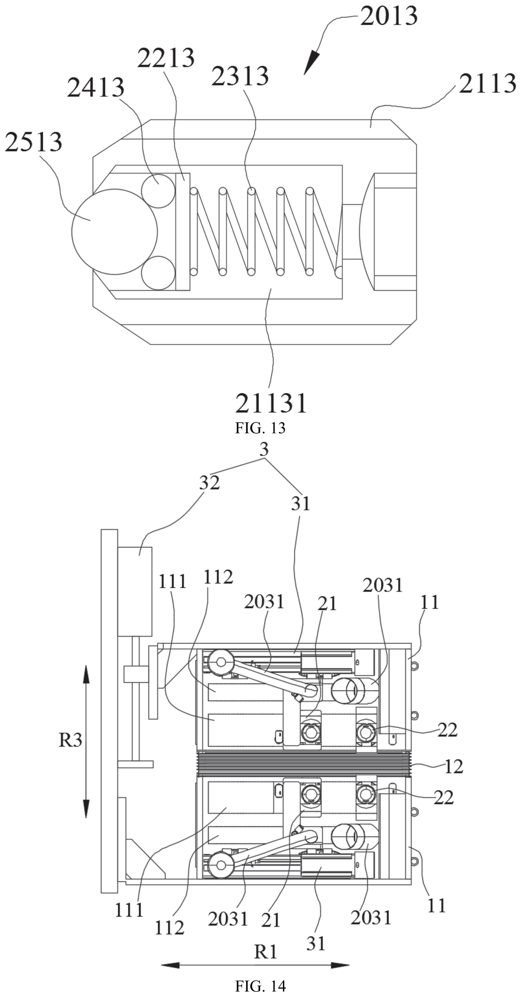

In an embodiment, referring to FIG. 13, the mounting member 2013 includes a housing sleeve 2113, a bearing member 2213, an elastic member 2313, an auxiliary ball 2413, and a main ball 2513. The housing sleeve 2113 is connected to the base body 2012, and the housing sleeve 2113 has a cavity for telescopic movement 21131. The elastic member 2313 is located in the cavity for telescopic movement 21131, and the elastic member 2313 is in contact with both the bearing member 2213 and the housing sleeve 2113. The auxiliary ball 2413 is located in the cavity for telescopic movement 21131, the auxiliary ball 2413 is located on a side of the bearing member 2213 facing away from the elastic member 2313, a plurality of auxiliary balls 2413 are provided, and the plurality of auxiliary balls 2413 are spaced apart from each other along a circumferential direction of the housing sleeve 2113. The main ball 2513 is located on a side of the auxiliary ball 2413 facing away from the bearing member 2213. When the mounting member 2013 is in the extended state, a side of the main ball 2513 facing the elastic member 2313 abuts against the auxiliary ball 2413, and a side of the main ball 2513 facing away from the elastic member 2313 abuts against the housing sleeve 2113 to restrict the main ball 2513 from being detached from the cavity for telescopic movement 21131. The side of the main ball 2513 facing away from the elastic member 2313 partially protrudes from the housing sleeve 2113 to enable the main ball 2513 to be partially located in the protection nozzle 202. When the mounting member 2013 is in the retracted state, the main ball 2513 is retracted into the cavity for telescopic movement 21131, and the protection nozzle 202 is capable of being removed from between the two mounting members 2013.

Illustratively, the elastic member 2313 may be a spring.

In the embodiments of the present disclosure, the elastic force of the elastic member 2313 is sequentially transmitted to the bearing bracket, the auxiliary ball 2413, and the main ball 2513. By means of the elastic force of the elastic member 2313, the side of the main ball 2513 facing away from the elastic member 2313 is capable of being maintained in contact with the housing sleeve 2113, and the side of the main ball 2513 facing away from the elastic member 2313 partially protrudes from the housing sleeve 2113. Therefore, the elastic force of the elastic member 2313 enables the mounting member 2013 to maintain in the extended state. When the protection nozzle 202 is required to be removed from between the two mounting members 2013, the operator may pull the protection nozzle 202 downward with a force, and the protection nozzle 202 presses the main balls 2513 of the two mounting members 2013 towards two sides respectively, such that the main balls 2513 of the two mounting members 2013 retract into the cavity for telescopic movement 21131 against the action force of the spring under the action of the pressing force from the protection nozzle 202. The mounting members 2013 are switched from the extended state to the retracted state, and the main balls 2513 are removed from the corresponding protection nozzle 202, thereby enabling the protection nozzle 202 to be removed from between the two mounting members 2013. When a new protection nozzle 202 is required to be mounted between the two mounting members 2013, the operator may press the protection nozzle 202 upward into the space between the two mounting members 2013. During the process of pressing the protection nozzle 202 upward into the space between the two mounting members 2013, the main balls 2513 of the two mounting members 2013 retract into the cavity for telescopic movement 21131 against the action force of the spring under the action of the pressing force from the protection nozzle 202, such that the protection nozzle 202 is capable of moving upward through the main balls 2513, and then continues to move upward until the elastic member 2313 retracted into the cavity for telescopic movement 21131 extends into the protection nozzle 202 under the action of the elastic force. The two mounting members 2013 are in the extended state, such that the protection nozzle 202 can be mounted between the two mounting members 2013. By means of the interaction of the elastic force transmitted by the elastic member 2313 to the main ball 2513 and the pressing force from the protection nozzle 202, the mounting members 2013 are switched between the extended state and the retracted state, thereby achieving relatively rapid disassembly and assembly of the protection nozzle 202.

In an embodiment, referring to FIG. 2 and FIG. 4, the protection body 11 and a plurality of shields 12 jointly define one protection cavity 13 in an enclosing manner.

In the embodiments of the present disclosure, the protection body 11 and the plurality of shields 12 jointly define one protection cavity 13 in an enclosing manner, and the plurality of shields correspond to one protection cavity, such that the partitioning of the protection cavity 13 can be reduced. The protection cavity 13 jointly defined by the protection body 11 and the plurality of shields 12 in an enclosing manner achieves a relatively large space in the protection cavity 13, such that the welding nozzle can smoothly extend into the welding zone 23 through the protection cavity 13 for performing welding operations.

In the embodiments of the present disclosure, the arrangement form of the protection body 11 and the plurality of shields 12 is not limited. Illustratively, the protection body 11 and each shield 12 may define one protection cavity 13 in an enclosing manner.

The embodiments of the present disclosure provide a position adjustment method. Referring to FIG. 14, the position adjustment method includes:
step S1: driving a protection assembly and/or a protection body to move by a drive assembly, such that at least one protection assembly and a corresponding shield move.

In the embodiments of the present disclosure, the telescopic movement of the shield 12 adapts to changes in the space of the housing 1 caused by the movement of the protection assembly, which functions to better separate the protection cavity 13 and restricts welding materials in the protection cavity 13 from escaping from the protection cavity 13, thereby better protecting portions of the battery unit outside the welding zone 23 to the greatest extent possible during the welding process. Furthermore, by means of the movement of the protection assembly, the spacing between corresponding welding zones 23 can be adjusted to adapt to the welding of terminal posts with varying spacings therebetween.

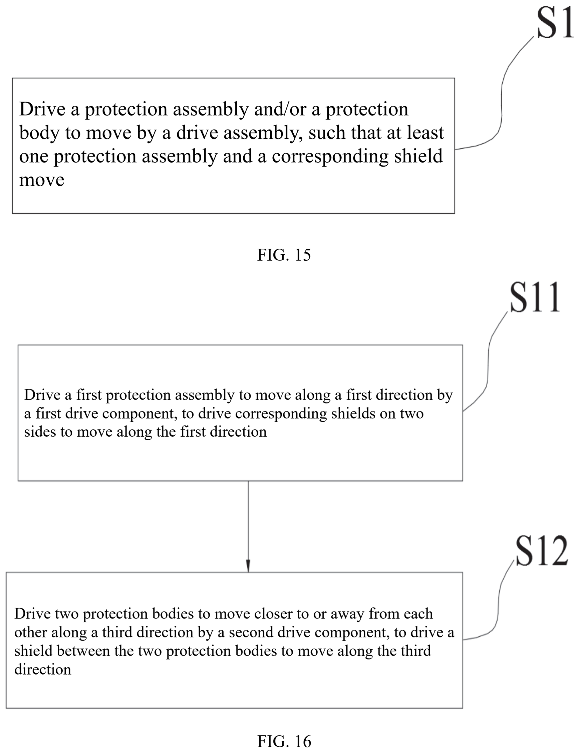

In an embodiment, referring to FIG. 15, driving the protection assembly and/or the protection body 11 to move by the drive assembly 3 such that at least one protection assembly and the corresponding shield 12 move includes:
step S11: driving a first protection assembly to move along a first direction by a first drive component, to drive corresponding shields on two sides to move along the first direction.

In the embodiments of the present disclosure, by driving the first protection assembly 21 to move through the first drive component 31, the spacing between the two protection assemblies along the first direction and the spacing between the corresponding welding zones 23 along the first direction can be adjusted, thereby adapting to the welding of terminal posts with varying spacings therebetween along the first direction. By moving the corresponding shields 12 on the two sides along the first direction to adapt to changes in the space of the housing 1 caused by the movement of the first protection assembly 21, welding materials in the protection cavity 13 can be restricted from escaping from the protection cavity 13, thereby better protecting the battery unit during the welding process.

In an embodiment, referring to FIG. 15, driving the protection assembly and/or the protection body 11 to move by the drive assembly 3 such that at least one protection assembly and the corresponding shield 12 move includes:
step S12: driving two protection bodies to move closer to or away from each other along a third direction by a second drive component, to drive a shield between the two protection bodies to move along the third direction.

In the embodiments of the present disclosure, since the second drive component 32 drives two protection bodies 11 to move closer to or away from each other along the third direction, to change the spacing between the two protection bodies 11 along the third direction, the spacing between the protection assemblies corresponding to the two protection bodies 11 along the third direction and the spacing between the corresponding welding zones 23 along the third direction are adjusted, thereby adapting to the welding of terminal posts with varying spacings therebetween along the third direction. The two moving protection bodies 11 drive the shield 12 between the two protection bodies 11 to move to extend and retract along the third direction, such that the shield 12 between the two protection bodies 11 can adapt to changes in the space between the two protection bodies 11, thereby restricting welding materials in the protection cavity 13 from escaping from the protection cavity 13, and thus better protecting the battery unit during the welding process.

The embodiments of the present disclosure provide a welding method. Referring to FIG. 16, the welding method includes:
step S21: driving a protection assembly and/or a protection body to move by a drive assembly, such that at least one protection assembly and a corresponding shield move, where the moving protection assembly is configured to adjust a spacing between welding zones of a plurality of protection assemblies to adapt to welding of terminal posts with varying spacings therebetween; and
step S22: sequentially extending a welding nozzle of a welding device into each welding zone, to weld a conductor to the terminal post corresponding to each welding zone.

In the embodiments of the present disclosure, since the drive assembly 3 drives the protection assembly and/or the protection body 11 to move, the welding zone 23 of the corresponding protection assembly moves accordingly, such that the spacing between the plurality of welding zones 23 changes, thereby adapting to the welding of terminal posts with varying spacings therebetween. The shield 12 moves to adapt to changes in the space of the housing 1 during the movement of the protection assembly, thereby better protecting the battery unit. The welding nozzle welds the conductor to the terminal post in the welding zone 23, and welding materials such as fumes and high-temperature molten substances generated during the welding process are substantially retained in the welding zone 23 or diffuse into the protection cavity 13. Therefore, the welding materials are less likely to diffuse to portions of the battery unit outside the welding zone 23, thereby better protecting the battery unit.

In an embodiment, referring to FIG. 16, the welding method further includes:
step S23: providing protective gas to the welding zone through an air pipe; and
step S24: extracting welding materials generated during a welding process from the welding zone through the air pipe.

Illustratively, referring to FIG. 6, the air pipe configured to provide protective gas to the welding zone 23 is a protective gas pipe 2032.

Illustratively, referring to FIG. 6, the air pipe configured to extract welding materials from the welding zone 23 is an air extraction pipe 2031.

In the embodiments of the present disclosure, the protective gas provided to the welding zone 23 through the air pipe can prevent high-temperature metals from being damaged by an external gas during the welding process in which the welding nozzle extends into the welding zone 23 to weld the terminal post, which is beneficial for improving welding quality. The welding materials such as fumes and high-temperature molten substances generated during the welding process are extracted from the welding zone 23 through the air pipe, such that the welding zone 23 can be cleaned in a timely manner during the welding process.

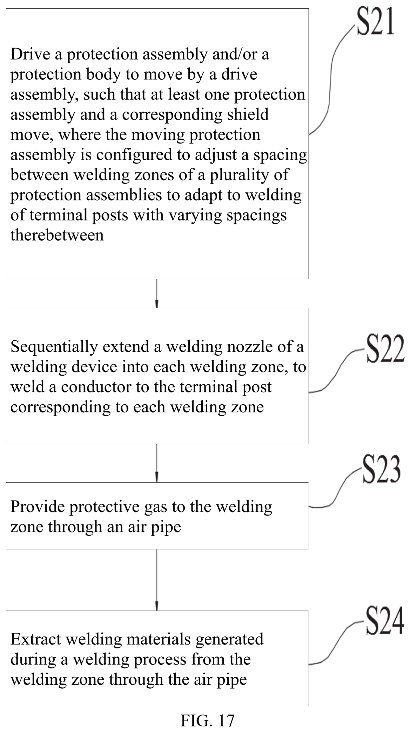

Referring to FIG. 17, the specific process of the welding method is described in the embodiments of the present disclosure.

In step S301, the first drive component drives the corresponding first protection assembly to move along the first direction, to adjust the spacing between two corresponding protection assemblies along the first direction, where the moving first protection assembly drives the corresponding shields on two sides to move.

In step S302, the second drive component drives two protection bodies to move along the third direction, to adjust the spacing between two corresponding protection assemblies along the third direction, where the two moving protection bodies drive the shield located between the two protection bodies to move along the third direction.

In step S303, the welding protection device moves to move each welding zone of the welding protection device to a position at which the corresponding electrode of the battery unit to be welded is located.

In step S304, protective gas is provided to the welding zone through an air pipe.

In step S305, the welding nozzle extends into the welding zone to weld the conductor to the terminal post corresponding to each welding zone.

In step S306, welding materials generated during the welding process are extracted from the welding zone through the air pipe.

The foregoing embodiments are merely used to illustrate the technical solutions of the present disclosure, rather than limit the same. Although the present disclosure has been described in detail with reference to the foregoing embodiments, those of ordinary skill in the art should understand that modifications can still be made to the technical solutions recorded in the foregoing embodiments, or equivalent substitutions to some or all of the technical features can be made. However, such modifications or substitutions do not make the spirit of the corresponding technical solutions deviate from the scope of the technical solutions in the embodiments of the present disclosure, and shall all fall within the scope of the present disclosure. In particular, the technical features mentioned in the embodiments can be combined in any manner, provided that there is no structural conflict.

### Industrial Applicability

According to the welding protection device of the embodiments of the present disclosure, the drive assembly drives the protection assembly and/or the protection body to move so as to move at least one protection assembly and the corresponding shield, and change the position of the protection assembly, thereby changing the spacing between the corresponding protection assemblies and the spacing between the welding zones of the corresponding protection assemblies. The spacing between the corresponding welding zones is adjusted, such that the spacing between the corresponding welding zones can be adapted to the spacing between the terminal posts to be welded, and thus the welding nozzle of the welding device can extend into each welding zone to weld the conductor to the corresponding terminal post. Since the extending and retracting direction of each shield is arranged along the movement direction corresponding to the protection assembly, the telescopic shield can adapt to changes in the movement space of the housing caused by the movement of the protection assembly. The shield can separate, to the greatest extent possible, the protection cavity from the rear side of the housing facing away from the protection cavity when the protection assembly moves, and by means of the housing and the telescopic shield, welding materials such as fumes and high-temperature molten substances generated during welding are retained in the protection cavity to the greatest extent possible, thereby restricting the welding materials from escaping from the protection cavity and preventing, to the greatest extent possible, the welding materials from damaging the portions of the battery unit outside the welding zone, which is beneficial for better protecting the battery unit during the welding process. Therefore, the welding protection device according to the embodiments of the present disclosure is capable of accommodating the welding of terminal posts with varying spacings therebetween while providing protection.

## Claims

1. A welding protection device, comprising:
a housing, comprising a protection body and a shield, wherein the protection body and the shield define a protection cavity in an enclosing manner, and the shield is capable of extending and retracting;
a protection assembly, disposed on the housing, wherein a plurality of protection assemblies are provided, each protection assembly having a welding zone in communication with the protection cavity, wherein the welding zone penetrates through the protection assembly and is configured for a welding nozzle to pass therethrough for welding; and
a drive assembly, disposed on the protection body, wherein the drive assembly is configured to drive the protection assemblies and/or the protection body to move, such that at least one of the protection assemblies and the shield move, and an extending and retracting direction of each shield is arranged along a movement direction corresponding to the protection assembly, so as to restrict welding materials from escaping from the protection cavity.

2. The welding protection device according to claim 1, wherein the shield comprises:
a supporting body, disposed on the corresponding protection body and/or the corresponding protection assembly, a plurality of supporting bodies being provided, and the plurality of supporting bodies being sequentially spaced apart from each other; and
a folding member, disposed on the supporting body, wherein the folding member is disposed between each two adjacent supporting bodies, and the folding member and the corresponding supporting bodies are capable of being folded relative to each other, such that the two adjacent supporting bodies move closer to or away from each other.

3. The welding protection device according to claim 2, wherein the folding member of the shield comprises two interconnected folding plates capable of being folded relative to each other, wherein:
each of the folding plates is connected to a corresponding supporting body of two adjacent supporting bodies; and
the folding plates and the corresponding supporting bodies are capable of being folded relative to each other, and positions at which the folding plates and the corresponding supporting bodies are folded relative to each other are target positions, wherein an arrangement direction of a plurality of target positions is consistent with an arrangement direction of a plurality of corresponding supporting bodies.

4. The welding protection device according to any one of claims 1 to 3, wherein:
the drive assembly comprises a first drive component disposed on the protection body;
at least one of the protection assemblies is a first protection assembly, and two opposite sides of the first protection assembly are each provided with the shield, an arrangement direction of the shields on the two sides being a first direction;
the first drive component drives the first protection assembly to move along the first direction;
and
extending and retracting directions of the shields on the two sides are arranged along the first direction.

5. The welding protection device according to claim 4, wherein:
the protection body is provided with a guide groove and an auxiliary groove spaced apart from each other, wherein an arrangement direction of the guide groove and the auxiliary groove is a second direction, the second direction being arranged to intersect with the first direction; and
the protection assembly comprises:
a base, disposed on the housing, wherein the base is provided with positioning portions spaced apart from each other along the second direction, wherein the corresponding positioning portion is located in the guide groove, such that the corresponding positioning portion is in positioning contact with the protection body along the second direction;
a protection nozzle, at least partially located on a side of the base facing away from the protection cavity, wherein:
the welding zone penetrates through the base and the protection nozzle;
the protection nozzle is provided with a mounting portion connected to the base, wherein the corresponding mounting portion is located between two of the positioning portions along the second direction, and two opposite sides of the corresponding mounting portion along the first direction are each provided with the shield located in the guide groove; and
the first drive component is configured to drive the base and/or the protection nozzle to move along the first direction; and
an air pipe, extending from a side of the housing facing the protection cavity to a side of the housing facing away from the protection cavity, wherein the corresponding air pipe is disposed in the auxiliary groove in a penetrating manner, and two opposite sides of the corresponding air pipe along the first direction are each provided with the shield located in the auxiliary groove, wherein an end of the air pipe facing away from the protection cavity is connected to the protection nozzle, to provide protective gas to the welding zone and/or to evacuate the welding zone to a negative pressure.

6. The welding protection device according to claim 4, wherein at least one of the protection assemblies is a second protection assembly, wherein:
the second protection assembly and the first protection assembly are spaced apart from each other along the first direction;
the second protection assembly is connected to the protection body; and
in the shields on the two sides, the shield on one side is connected between the first protection assembly and the second protection assembly, and the shield on the other side is connected between the first protection assembly and the protection body.

7. The welding protection device according to any one of claims 1 to 6, wherein the drive assembly comprises a second drive component disposed on the protection body, and two protection bodies are provided, a direction in which the two protection bodies being spaced apart from each other is a third direction, wherein:
the shield is correspondingly connected between the two protection bodies, wherein the extending and retracting direction of the shield between the two protection bodies is arranged along the third direction; and
the two protection bodies are both disposed on the second drive component, and the second drive component drives the two protection bodies to move along the third direction, such that protection assemblies corresponding to the two protection bodies move closer to or away from each other along the third direction.

8. The welding protection device according to any one of claims 1 to 4 or claim 6 or 7, wherein the protection assembly comprises:
a base, disposed on the housing, wherein the base comprises a base body and a plurality of mounting members disposed on the base body, wherein at least two of the mounting members are arranged opposite to each other, and the mounting members are capable of extending and retracting; and
a protection nozzle, connected to the base body of the base, wherein:
the welding zone penetrates through the protection nozzle and the base body of the base,
the mounting member is capable of being at least partially located in the protection nozzle in an extended state, such that the protection nozzle is mounted between two mounting members arranged opposite to each other;
the mounting members are capable of being switched from the extended state to a retracted state under an action of an external force, such that the protection nozzle is detached from the mounting member; and
the drive assembly is configured to drive at least one of the protection body, the protection nozzle, and the base body of the base to move.

9. The welding protection device according to claim 8, wherein the mounting member comprises:
a housing sleeve, connected to the base body, wherein the housing sleeve has a cavity for telescopic movement;
a bearing member, located in the cavity for telescopic movement;
an elastic member, located in the cavity for telescopic movement, wherein the elastic member is in contact with both the bearing member and the housing sleeve;
an auxiliary ball, located in the cavity for telescopic movement, wherein the auxiliary ball is located on a side of the bearing member facing away from the elastic member, wherein a plurality of auxiliary balls are provided, and the plurality of auxiliary balls are spaced apart from each other along a circumferential direction of the housing sleeve; and
a main ball, located on a side of the auxiliary ball facing away from the bearing member,
wherein:
when the mounting member is in the extended state, a side of the main ball facing the elastic member abuts against the auxiliary ball, a side of the main ball facing away from the elastic member abuts against the housing sleeve to restrict the main ball from being detached from the cavity for telescopic movement, and the side of the main ball facing away from the elastic member partially protrudes from the housing sleeve to enable the main ball to be partially located in the protection nozzle; and
when the mounting member is in the retracted state, the main ball is retracted into the cavity for telescopic movement, and the protection nozzle is capable of being removed from between the two mounting members.

10. The welding protection device according to any one of claims 1 to 9, wherein the protection body and a plurality of shields jointly define one protection cavity in an enclosing manner.

11. A welding system, comprising:
the welding protection device according to any one of claims 1 to 10;
a conveying device, configured to convey a battery unit to be welded to a welding position, wherein the welding protection device is configured to move to a position corresponding to a battery cell located at the welding position, such that each welding zone is located at a position at which a corresponding terminal post of the battery cell in the battery unit is located; and
a welding device, having a welding nozzle, wherein the welding nozzle is configured to pass through the welding zone to weld a conductor to the terminal post.

12. A position adjustment method, comprising:
driving a protection assembly and/or a protection body to move by a drive assembly such that at least one protection assembly and a corresponding shield move.

13. The position adjustment method according to claim 12, wherein said driving the protection assembly and/or the protection body to move by the drive assembly such that at least one protection assembly and the corresponding shield move comprises:
driving a first protection assembly to move along a first direction by a first drive component, to drive corresponding shields on two sides to move along the first direction.

14. The position adjustment method according to claim 12 or 13, wherein said driving the protection assembly and/or the protection body to move by the drive assembly such that at least one protection assembly and the corresponding shield move comprises:
driving two protection bodies to move closer to or away from each other along a third direction by a second drive component, to drive a shield between the two protection bodies to move along the third direction.

15. A welding method, comprising:
driving a protection assembly and/or a protection body to move by a drive assembly, such that at least one protection assembly and a corresponding shield move, wherein the protection assembly that moves is configured to adjust a spacing between welding zones of a plurality of protection assemblies to adapt to welding of terminal posts with varying spacings therebetween; and
sequentially extending a welding nozzle of a welding device into each welding zone, to weld a conductor to the terminal post corresponding to each welding zone.

16. The welding method according to claim 15, further comprising:
providing protective gas to the welding zone through an air pipe; and
extracting welding materials generated during a welding process from the welding zone through the air pipe.
